# EUROPEAN PATENT APPLICATION

(11) **EP 1 315 020 A2**
(43) Date of publication of application: **28.05.2003**
(21) Application number: 02079478.0
(22) Date of filing: 23.10.2002
(51) Int. Cl.: G02C 9/04

(54) **Clever frame/clip**

(30) Priority: 13.11.2001 CA 2363059
(71) Applicant: Chai, WeiZhen, H4A 1V2 Montreal, Quebec (CA)
(72) Inventor: Chai, WeiZhen, H4A 1V2 Montreal, Quebec (CA)
(74) Representative: W.P. Thompson & Co.

(57) **Abstract**

This invention offers a new frame clip with mechanical structure which is easy to use, reliable while matching various styles of eyewear.

## Description

### Background of the invention

These years magnetic easy frame/clip is very popular among people wearing glasses. Though easy to use when it's new, it'd become non-reliable after using a period of time. Also it's said the magnitic pieces would cause headache to some groups of people.

### Brief summary of the invention

This invention is to offer a new frame/clip which is mechanic structure and easy to use, reliable while matching various kinds of styles of designs.

### Brief description of the drawing

figure 1----the frame structure, which is observed frome above
figure 2----the half-free lock structure
figure 3----the locking pin of the clip

### Detailed description of the invention

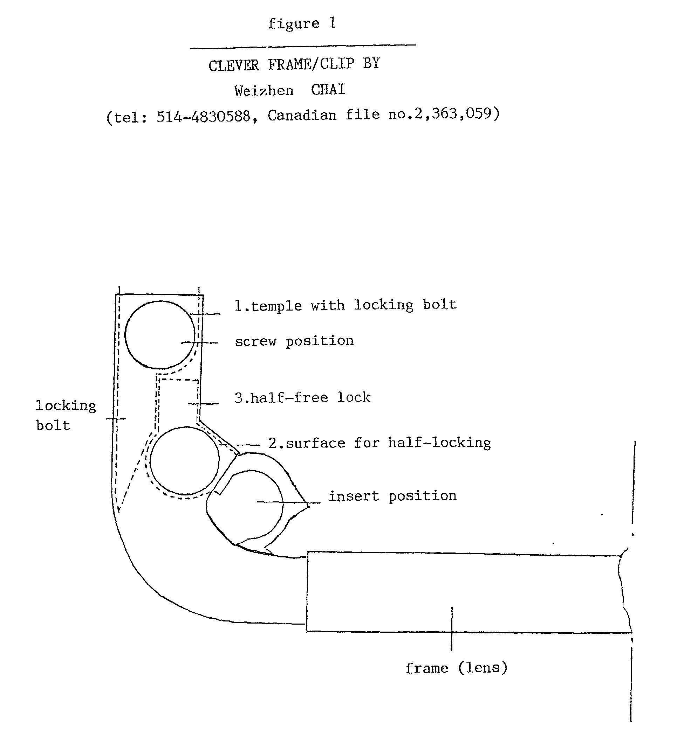

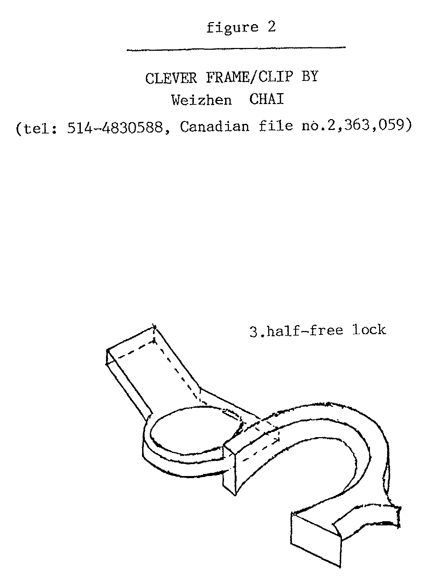

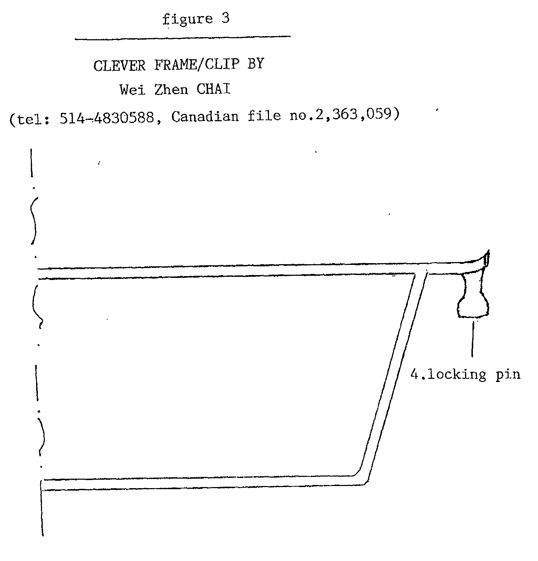

The invention is mainly comprised of following parts:
part 1. temple with locking bolt (see figurre 1)
part 2. surface for half-locking (see figure 1);
part 3. half-free lock (see figure 1 and figure 2);
part 4. locking pin of the clip (see figure 3)

The above description includes the parts on one side, let's say, the right side covering the right eye. For the other side, the left side covering the left eye, the same parts would be at the same symmetrical positions.

When put to use, the user should do as following:
(1) Set the temple (part 1) at close position;
(2)Open the half-free lock (part 3)--(optional, as lock half-free, insert pin could also be simply pushed into the position)
(3 )Insert part 4 into the insert position;
(4)Close the half-free lock (part 3)
(5)Then open part 1. When part 1 is opened (put-to-head position), the locking bolt of the temple would completely lock the half-free lock (part 3). Therefore when people wear their glasses, or when the temples were kept at opening positions, the clip would be firmly connected with the frame.

When people want to strip the clip off the frame, just close the temples(part 1), so that the locking bolt and the half-free lock is completely disconnected and the half-free lock is no longer locked(half-free). Then open the half-free lock (part 3) and take the clip-on off the frame (or just push the pin out of the insert position)

## Claims

1. A frame/clip, comprising a pair of temples with locking bolt, a pair of half-free locks, locking surfaces, and locking pins of the clip.

2. A frame defined in claim 1, in which the locking bolts of the temples play the locking function to the clip by fixing the half-free locks

3. A frame defined in claim 1, in which the half-free locks fix the locking pins of the clip under the function of the locking bolts of the temples.

4. A clip defined in claim 1, in which the locking pins have a outer-shaped end.
